# DEMANDE DE BREVET EUROPEEN

(11) **EP 1 923 270 A1**
(43) Date de publication de la demande: **21.05.2008**
(21) Numéro de dépôt: 07301508.3
(22) Date de dépôt: 29.10.2007
(51) Int. Cl.: B60R 13/04, B60R 9/058

(54) **Ensemble de masquage pour un pavillon de véhicule automobile, et véhicule automobile associé**

(30) Priorité: 14.11.2006 FR 0654892
(71) Demandeur: Peugeot Citroen Automobiles SA, 78943 Vélizy-Villacoublay Cedex (FR)
(72) Inventeur: MEUNIER, Jérémie, 92290, CHATENAY MALABRY (FR)
(74) Mandataire: Allain, Laurent

(57) **Abrégé**

Cet ensemble (18) comprend un enjoliveur (30) de pavillon présentant une surface d'aspect extérieure (52) et une surface intérieure (54). L'enjoliveur (30) définit au moins une ouverture (32) de passage d'une barre de toit débouchant dans les surfaces (52, 54). L'ensemble (18) comprend un volet (36) mobile par rapport à l'enjoliveur (30) entre une position d'obturation de l'ouverture de passage (32) et une position de libération de l'ouverture de passage (32). Il comprend une agrafe (34) de fixation de l'enjoliveur (30), solidaire de l'enjoliveur (30). L'agrafe (34) comprend des moyens (64) de fixation sur un élément de caisse (12). L'ensemble (18) comprend des moyens (38) d'articulation du volet (36) sur l'agrafe de fixation (34).

## Description

La présente invention concerne un ensemble de masquage pour un pavillon de véhicule automobile, du type comprenant :
- un enjoliveur de pavillon, présentant une surface d'aspect extérieure et une surface intérieure, l'enjoliveur définissant au moins une ouverture de passage d'une barre de toit débouchant dans lesdites surfaces ;
- un volet mobile par rapport à l'enjoliveur entre une position d'obturation de l'ouverture de passage et une position de libération de l'ouverture de passage;
- au moins une agrafe de fixation de l'enjoliveur sur un élément de caisse, solidaire de l'enjoliveur, l'agrafe comprenant des moyens de fixation sur un élément de caisse.

On connaît de EP-A-1 666 309 un ensemble de masquage de véhicule automobile comprenant un enjoliveur s'étendant le long d'un bord latéral du pavillon. L'enjoliveur est fixé sur le pavillon par l'intermédiaire d'une pluralité d'agrafes réparties sur sa longueur. Chaque agrafe comprend des moyens d'encliquetage sur des supports solidaires du pavillon, et des ergots de fixation à l'enjoliveur.

Pour permettre la fixation d'une barre de toit sur la caisse de véhicule, il est connu de ménager des ouvertures traversantes dans l'enjoliveur, afin d'offrir un accès aux fixations de barres de toit disposées sur la caisse du véhicule. Lorsque les barres de toit sont démontées, chaque ouverture de passage est obturée par un volet mobile entre une position d'obturation de l'ouverture et une position de libération de l'ouverture.

Le volet est articulé sur un support qui doit être fixé sous l'enjoliveur au voisinage d'une ouverture de passage. Le support doit être fabriqué, puis fixé sur l'enjoliveur, ce qui augmente le coût de l'ensemble de masquage.

Un but de l'invention est donc d'obtenir un ensemble de masquage de moindre coût, qui présente néanmoins un aspect esthétique satisfaisant lorsque des barres de fixation sont démontées.

A cet effet, l'invention a pour objet un ensemble de masquage du type précité, caractérisé en ce que l'ensemble comprend des moyens d'articulation du volet sur l'agrafe de fixation.

L'ensemble de masquage selon l'invention peut comprendre l'une ou plusieurs des caractéristiques suivantes, prise(s) isolément ou suivant toutes combinaisons techniquement possibles :
- les moyens d'articulation comprennent une patte de fixation solidaire de l'un du volet et de l'agrafe, et un logement de guidage de la patte ménagé dans l'autre du volet et de l'agrafe, le logement recevant à coulissement la patte de fixation ;
- les moyens d'articulation comprennent une patte de fixation flexible fixée sur le volet et sur l'agrafe ;
- l'agrafe présente une surface adjacente à l'ouverture de passage, la surface adjacente recevant les moyens d'articulation ;
- les moyens de fixation comprennent au moins un trou taraudé débouchant à l'opposé de la surface intérieure;
- dans la position d'obturation, le volet affleure la surface extérieure de l'enjoliveur ;
- l'agrafe est rapportée sous la surface intérieure ; et
- l'enjoliveur comprend deux bords latéraux formant des gouttières, l'agrafe comprenant des ergots de fixation engagés dans les gouttières.

L'invention a en outre pour objet un véhicule automobile, caractérisé en ce qu'il comprend :
- des éléments de caisse formés par un pavillon et une ossature latérale ; et
- un ensemble de masquage tel que défini ci-dessus, la ou chaque agrafe étant fixée sur les éléments de caisse.

Le véhicule selon l'invention peut comprendre la caractéristique suivante :
- l'enjoliveur s'étend le long d'un bord latéral du pavillon.

L'invention sera mieux comprise à la lecture de la description qui va suivre, donnée uniquement à titre d'exemple, et faite en se référant aux dessins annexés, sur lesquels :
- la Figure 1 est une vue de dessus de la carrosserie d'un véhicule muni d'un ensemble de masquage selon l'invention ; et
- la Figure 2 est une vue en perspective de dessous de l'ensemble de masquage de la Figure 1.

Dans tout ce qui suit, les orientations choisies sont les orientations habituelles d'un véhicule automobile. Ainsi, les termes « supérieur », « inférieur », « haut », « bas », « intérieur », « extérieur » « gauche », « droite », « avant », « arrière » s'entendent par rapport au sens de circulation normal d'un véhicule automobile, et à la position d'un conducteur.

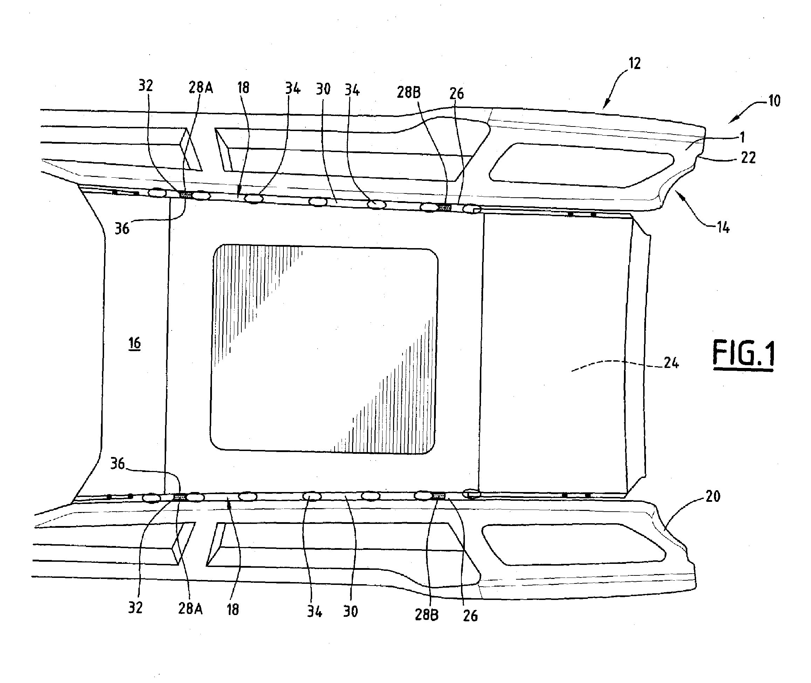

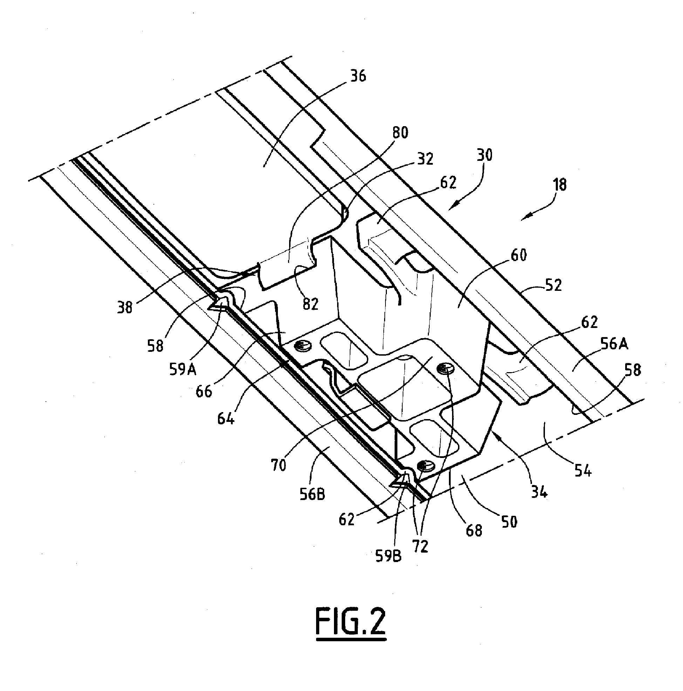

Un véhicule automobile 10 selon l'invention est représenté sur les Figures 1 et 2.

Comme illustré par la Figure 1, ce véhicule 10 comprend des éléments de caisse 12 qui comportent une ossature latérale 14 et un pavillon supérieur 16 fixé sur l'ossature latérale 14. Le véhicule 10 comporte en outre deux ensembles de masquage 18 selon l'invention qui s'étendent longitudinalement à gauche et à droite du pavillon 16.

L'ossature latérale 14 comprend un flanc gauche 20 et un flanc droit 22 de la carrosserie délimitant entre eux un habitacle 24 du véhicule.

Chaque flanc 20, 22 délimite un rebord supérieur 26 s'étendant au-dessus de l'habitacle 24. Chaque rebord 26 comprend au moins deux points 28A, 28B d'ancrage des barres de toit, situés respectivement vers l'avant et vers l'arrière du rebord 26. Chaque point 28A, 28B comprend par exemple des moyens de vissage d'une barre de toit (non représentée).

Le pavillon 16 est appliqué sur le rebord 26 pour obturer l'habitacle 24 vers le haut. Il est fixé sur le rebord 26 par exemple par vissage ou par collage.

Chaque flanc 20, 22 délimite avec le pavillon 16, un interstice longitudinal dans lequel est disposé un ensemble de masquage 18.

Chaque ensemble de masquage 18 comprend un enjoliveur 30 qui délimite au moins deux ouvertures de passage 32 de barres de toit, et une pluralité d'agrafes de fixation 34 de l'enjoliveur 30 sur les éléments de caisse 12. L'ensemble de masquage 18 comprend en outre, pour chaque ouverture de passage 32, un volet 36 d'obturation de l'ouverture 32 et des moyens 38 d'articulation du volet 36 sur une agrafe 34.

Comme illustré par la Figure 2, l'enjoliveur 30 est réalisé à base d'un profilé 50 de section transversale en forme de C s'ouvrant vers le bas.

Le profilé 50 présente une surface extérieure d'aspect 52 convexe et une surface intérieure concave 54 dirigée vers les éléments de carrosserie 12. Il présente en outre deux bords latéraux 56A, 56B repliés vers le bas et l'un vers l'autre.

Chaque bord latéral 56A, 56B délimite une gouttière 58 située en regard de la gouttière 58 de l'autre bord 56B, 56A.

Pour chaque agrafe 34, le bord 56A, 56B comprend deux butées 59A, 59B de blocage longitudinal de l'agrafe 34 qui font saillie dans la gouttière 58. Les butées 59A, 59B sont espacées longitudinalement.

Dans l'exemple représenté par la Figure 2, les ouvertures de passage 32 sont de formes sensiblement rectangulaires. Elles s'étendent en regard d'un point d'ancrage 28A, 28B. Ainsi, chaque point d'ancrage 28A, 28B est situé en regard d'une ouverture de passage 32. Chaque ouverture 32 débouche dans la surface extérieure 52 et dans la surface intérieure 54.

Les agrafes 34 sont réparties le long de l'enjoliveur 30. Chaque agrafe 34 est rapportée sous l'enjoliveur 30 sous la surface intérieure 54.

Comme illustré par la Figure 2, chaque agrafe 34 comprend un corps 60, quatre ergots de fixation 62 à l'enjoliveur 30, et des moyens 64 de fixation sur les éléments de caisse 12.

Le corps 60 s'étend sensiblement longitudinalement sous la surface intérieure 54 entre les bords latéraux 56A, 56B.

Il présente une surface avant 66 et une surface arrière 68 sensiblement verticales, et une surface inférieure 70 sensiblement horizontale destinée à être appliquée sur les éléments de carrosserie 12.

Les ergots de fixation 64 font saillie horizontalement à l'écart du corps 60, respectivement à gauche et à droite du corps 60. Chaque ergot 62 présente une section transversale de forme sensiblement complémentaire à celle d'une gouttière 58. Les ergots 62 sont ainsi calés dans les gouttières 58 entre les butées 59A, 59B, afin de permettre la retenue de l'enjoliveur 30.

Les moyens de fixation 64 comprennent des trous taraudés 72 dans lesquels sont reçues des vis (non représentées) de fixation engagées sur les éléments de caisse 12. Les trous 72 s'étendent sensiblement verticalement et débouchent dans la surface inférieure 70.

En variante, les moyens de fixation 64 sont des moyens de fixation par encliquetage, comme décrit par exemple dans la demande EP-A-1 666 309 de la Demanderesse.

Dans l'ensemble de masquage 18 selon l'invention, au moins une agrafe 34 est située au voisinage de chaque ouverture de passage 32. Ainsi, l'une de la surface avant 66 ou de la surface arrière 68 du corps 60 borde l'ouverture de passage 32. Dans l'exemple représenté sur la Figure 2, la surface avant 66 borde cette ouverture 32.

Le volet 36 présente une forme sensiblement complémentaire à celle de l'ouverture 32. Le volet 32 est mobile par rapport à l'enjoliveur 30 par l'intermédiaire des moyens d'articulation 38, entre une position d'obturation de l'ouverture 32 représentée sur la Figure 2 et une position de libération de l'ouverture 32.

Dans la position d'obturation, le volet 36 est disposé dans l'ouverture 32. Il affleure extérieurement la surface extérieure 52 d'aspect de l'enjoliveur 30.

Dans la position de libération, le volet 36 a été tiré vers l'extérieur et vers le haut pour libérer l'accès au point d'ancrage 28A, 28B à travers l'ouverture 32.

Comme illustré par la Figure 2, les moyens d'articulation 38 comprennent une patte de fixation 80 rigide solidaire du volet 36, et un logement de guidage 82 de forme complémentaire à la patte 80, ménagé dans le corps 60 de l'agrafe.

La patte 80 est par exemple venue de matière avec le volet 32. Elle fait saillie vers le bas et vers l'arrière à l'écart du volet 32. Elle présente une section, prise dans un plan longitudinal sensiblement vertical en forme de demi-cercle s'ouvrant vers le haut.

Le logement de guidage 82 présente une forme sensiblement complémentaire à celle de la patte de fixation 80. Il débouche dans la surface avant 66, vers l'ouverture de passage 32. La patte 80 est reçue mobile à coulissement dans le logement 82.

Les moyens d'articulation 86 permettent ainsi de guider le déplacement du volet 36 entre sa position d'obturation et sa position de libération suivant une trajectoire en rotation autour d'un axe transversal.

Lorsque le volet 36 occupe sa position d'obturation, la longueur de la patte 80 située dans le logement 82 est maximale. Lorsque le volet 82 occupe sa position de libération, la patte 80 a été extraite en grande partie du logement 82, et la longueur de la patte 80 située dans le logement 82 est minimale.

Le fonctionnement de l'ensemble de masquage 18 selon l'invention va maintenant être décrit.

Initialement, lorsqu'il n'est pas nécessaire de monter des barres de fixation sur le toit du véhicule 10, les points d'ancrage 28A, 28B des barres de fixation sont maintenus cachés par les ensembles de masquage 18.

A cet effet, les volets d'obturation 36 sont maintenus dans leur position d'obturation, dans laquelle ils affleurent extérieurement la surface extérieure 52 d'aspect du profilé 50. L'aspect esthétique du véhicule dans cette configuration est donc préservé.

Lorsque les barres de toit doivent être montées sur le toit du véhicule, un utilisateur du véhicule déplace les volets 36 de leur position d'obturation vers leur position de libération.

A cet effet, il tire les volets 36 vers l'extérieur et vers le haut pour libérer les ouvertures 32. Le déplacement de chaque volet 36 entre ces deux positions est guidé par le coulissement de la patte de fixation 80 dans le logement de guidage 82.

Lorsque le volet 36 occupe sa position de libération, l'accès au point d'ancrage 28A, 28B est possible à travers l'ouverture 32. Le montage des barres de toit est alors effectué.

Dans l'invention qui vient d'être décrite, chaque volet d'obturation 36 est articulé directement sur une agrafe 34 de fixation placée de manière adjacente à une ouverture de passage 32. Ainsi, l'ensemble de masquage 18 est dépourvu de support spécifique pour le volet d'obturation 36. De tels supports ne devant pas être fabriqués, ni montés dans l'ensemble de masquage 18, le coût de cet ensemble 18 est diminué, tout en préservant l'aspect esthétique de l'ensemble de masquage. La disposition d'une agrafe 34 au voisinage de chaque ouverture 32 facilite le montage du volet 36.

En variante, le volet 36 est articulé sur une agrafe 34 par une patte de fixation souple 80 fixée d'une part, sur le volet 36, et d'autre part, sur une surface verticale 66, 68 de l'agrafe 34.

Dans une autre variante, le volet 36 est déplaçable vers l'intérieur du profilé 50 vers sa position de libération de l'ouverture 32, située entre l'enjoliveur 30 et les éléments de caisse 12.

## Revendications

1. Ensemble de masquage (18) pour un pavillon (16) de véhicule automobile (10), du type comprenant :
- un enjoliveur (30) de pavillon, présentant une surface d'aspect extérieure (52) et une surface intérieure (54), l'enjoliveur (30) définissant au moins une ouverture (32) de passage d'une barre de toit débouchant dans lesdites surfaces (52, 54) ;
- un volet (36) mobile par rapport à l'enjoliveur (30) entre une position d'obturation de l'ouverture de passage (32) et une position de libération de l'ouverture de passage (32) ;
- au moins une agrafe (34) de fixation de l'enjoliveur (30) sur un élément de caisse (12), solidaire de l'enjoliveur (30), l'agrafe (34) comprenant des moyens (64) de fixation sur un élément de caisse (12) ;
**caractérisé en ce que** l'ensemble (18) comprend des moyens (38) d'articulation du volet (36) sur l'agrafe (34) de fixation ; et
**en ce que** les moyens d'articulation (36) comprennent une patte de fixation (80) solidaire de l'un du volet (36) et de l'agrafe (34), et un logement (82) de guidage de la patte (80) ménagé dans l'autre du volet (36) et de l'agrafe (34), le logement (82) recevant à coulissement la patte de fixation (80).

2. Ensemble (18) selon la revendication 1, **caractérisé en ce que** les moyens d'articulation (38) comprennent une patte de fixation (80) flexible fixée sur le volet (36) et sur l'agrafe (34).

3. Ensemble (38) selon l'une quelconque des revendications précédentes, **caractérisé en ce que** l'agrafe (34) présente une surface (66) adjacente à l'ouverture de passage (32), la surface adjacente (66) recevant les moyens d'articulation (36).

4. Ensemble selon l'une quelconque des revendications précédentes, **caractérisé en ce que** les moyens de fixation (64) comprennent au moins un trou taraudé (72) débouchant à l'opposé de la surface intérieure (54).

5. Ensemble (18) selon l'une quelconque des revendications précédentes, **caractérisé en ce que** dans la position d'obturation, le volet (36) affleure la surface extérieure (52) de l'enjoliveur (30).

6. Ensemble (18) selon l'une quelconque des revendications précédentes, **caractérisé en ce que** l'agrafe (34) est rapportée sous la surface intérieure (54).

7. Ensemble (18) selon la revendication 6, **caractérisé en ce que** l'enjoliveur (30) comprend deux bords latéraux (56A, 56B) formant des gouttières (58), l'agrafe comprenant des ergots de fixation (62) engagés dans les gouttières (58).

8. Véhicule automobile (10), **caractérisé en ce qu'**il comprend :
- des éléments de caisse (12) formés par un pavillon (16) et une ossature latérale (14) ; et
- un ensemble de masquage (18) selon l'une quelconque des revendications précédentes, la ou chaque agrafe (34) étant fixée sur les éléments de caisse (12).

9. Véhicule (10) selon la revendication 8, **caractérisé en ce que** l'enjoliveur (30) s'étend le long d'un bord latéral du pavillon (16).
